# EUROPEAN PATENT SPECIFICATION

(11) **EP 0 848 664 B1**
(45) Date of publication and mention of the grant of the patent: **12.06.2002**
(21) Application number: 96925006.7
(22) Date of filing: 19.07.1996
(51) Int. Cl.: B32B 15/08, B32B 31/00

(54) **POLYMER/METAL LAMINATE AND METHOD FOR PRODUCING THE SAME**
POLYMER/METALLAMINAT UND VERFAHREN ZUR HERSTELLUNG
LAMINE POLYMERE/METAL ET SON PROCEDE DE PRODUCTION

(30) Priority: 21.07.1995 GB 9514984
(43) Date of publication of application: 24.06.1998
(73) Proprietor: Corus UK Limited, London SW1P 4WY (GB)
(72) Inventor: BUSBY, Nicholas, James, Abergavenny, Gwent NP7 7ED (GB)
(74) Representative: Fry, Alan Valentine
(86) International application number: GB9601742
(87) International publication number: WO9703823

(56) References cited:
- EP-A- 0 209 393
- EP-A- 0 312 302
- EP-A- 0 312 304
- EP-A- 0 312 309
- GB-A- 2 164 899
- GB-A- 2 238 507
- US-A- 4 213 487
- DATABASE WPI Section Ch, Week 8804 Derwent Publications Ltd., London, GB; Class A32, AN 88-025644 XP002017972 & JP,A,62 286 734 (TOYO KOHAN KK) , 12 December 1987
- DATABASE WPI Section Ch, Week 8803 Derwent Publications Ltd., London, GB; Class A32, AN 88-017845 XP002017973 & JP,A,62 279 937 (TOYO KOHAN KK) , 4 December 1987
- PATENT ABSTRACTS OF JAPAN vol. 013, no. 025 (M-787), 20 January 1989 & JP,A,63 237929 (NIPPON STEEL CORP), 4 October 1988,

## Description

This invention relates to a laminated corrosion resistant steel strip and more especially to steel strip known commonly as "tin mill products". The invention also relates to methods of producing such steel strip and products produced therefrom.

The term "tin mill products" includes steel strip and sheet (hereinafter referred to simply as "strip") subjected to a passivation treatment. These products include electrolytic chromium/chromium oxide-coated steel and are typically of a thickness between 0.05mm and 0.5mm.

Electrolytic chromium/chromium oxide coated steel is produced by coating the surfaces of thin gauge low carbon mild steel strip (known as black plate), with impervious films of passive material by, for example, anodic or cathodic polarisation to reduce significantly the active state of these coated surfaces. With this process, the thin gauge strip produced is resistant to corrosion.

Electrolytic chromium/chromium oxide coated steel strip (ECCS) is a low carbon, mild steel strip coated on both of its sides with a complex layer of chromium and chromium hydroxides applied by electradeposition.

Electrolytic steel strip is used predominantly in the packaging industry and, for example, in domestic appliances such as washing machines.

Because of its relatively low weight compared with steel, aluminium has been favoured for many thin gauge laminated products where resistance to corrosion is important. These products include reflectors for light fittings. The relatively high cost of aluminium has, however, caused producers to seek alternative and less expensive strip products able to replicate the properties of aluminium.

It is an object of this invention to provide a range of such alternative products.

It is known to laminate polymer films onto sheets of aluminium for *inter alia* decorative and reflective purposes. Hitherto, attempts to laminate polymer films onto steel have not been successful because of problems in achieving a satisfactory bond capable of surviving, for example, forming and drawing operations.

These problems have been overcome, or at least alleviated, in the present invention.

Thus, the present invention sets out to provide laminated tin mill products coated by a passivation process which have properties at least equal to those of conventional laminated aluminium strip products. The invention also sets out to provide methods of producing these laminated sheets.

According to the present invention in one aspect there is provided a laminated corrosion resistant steel strip comprising a film of polyethylene terephthalate which includes on one of its surfaces a bonding layer and is bonded by heating and rolling to a strip of chromium passivated steel, the strip being characterised in that the surface of the polyethylene terephthalate film remote from the bonding layer has a reflective metallic coating, the strip being further characterised in that the thickness of the polyethylene terephthalate film is between 10 and 100 µm and that the thickness of the strip of chromium passivated steel is between 0.05 mm and 0.5 mm, and in that the melting point of the bonding layer is between 150°C and 230°C.

Preferred ranges of thickness of the polyethylene film are between 10 and 80 µm, 12 and 50 µm, and 12 and 25 µm.

To minimise iridescence, a polyethylene terephthalate film thickness between 15 and 25 µm is preferred.

A typical thickness of metallic coating is 10nm, although thicknesses of between 5nm and 50nm may be employed. Coating may be achieved by vapour deposition. A bonding promoter for providing an enhanced bond between the metallic coating and the polyethylene terephthalate film may be provided. The polyethylene terephthalate film may also include a bonding layer. This bonding layer is heat activated and may take the form of a resin coating applied to one surface of the polyethylene terephthalate film or to the strip surface to which the film is to be applied. The melting point of this bonding layer is between 150°C and 230°C but should be below that of the polyethylene terephthalate film. A scratch inhibiting coating may be applied to one or both surfaces of the film.

It is a characteristic of tin mill products that they are work hardened and exhibit good weldability, formability, elongation and fabrication characteristics as exemplified by their wide use in the packaging industry. These characteristics when taken with steel's inherent tensile strength enable relatively thin gauge corrosion resistant steel strip having properties at least equivalent to those of aluminium to be .employed for a range of products.

In another aspect, there is provided a method of producing a corrosion resistant steel strip laminate, as defined in claim 8.

The steel strip is typically heated to a temperature of the order of 160°C before it enters the nip of a pair of contra-rotating rolls. The or each polyethylene terephthalate film is guided onto the or each side of the heated strip as it enters the roll nip and is bonded thereto.

The invention will now be described by way of example only with reference to the accompanying diagrammatic drawings, in which:-
Figure 1 illustrates typical apparatus for producing laminated corrosion resistant steel strip in accordance with the invention; and
Figures 2 and 3 are sections of laminated strip in accordance with the invention.

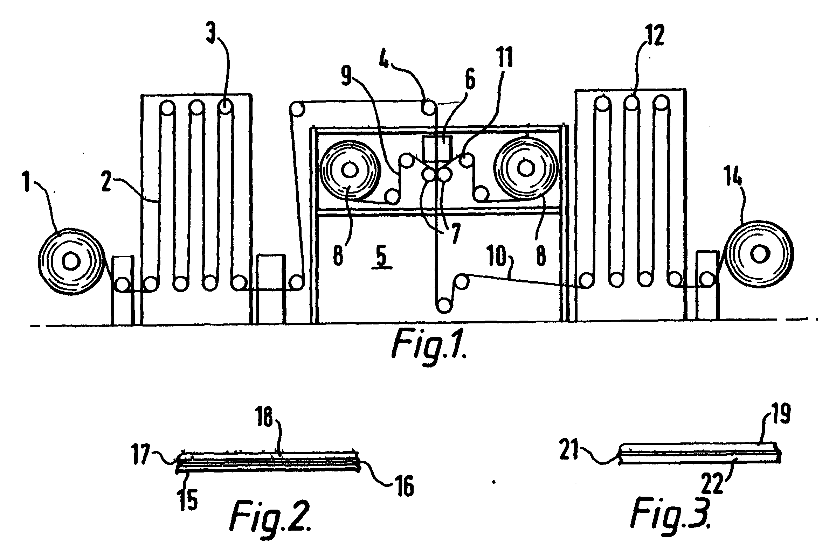

The apparatus illustrated in Figure 1 comprises a coil 1 of chromium passivated steel strip 2 of a thickness of between 0.05mm and 0.5mm which is passed around an accumulator 3 before being guided by rolls 4 into a coating chamber 5. As the strip 2 enters the chamber 5 it passes through an induction heater 6 which heats the strip to a temperature of approximately 160°C. Below the heater 6 are positioned two contra-rotating rolls 7. The rolls may have a polished or mirrored surface. This finish may be achieved by using chromium or chromium coated rolls.

Coils 8 of polyethylene terephthalate films 9 are positioned within the coating chamber 5. The thickness of the films 9 is preferably between 10 and 100 µm, a typical thickness being 20 µm. Each film is coated on one of its sides with metallic particles to create a reflective surface thereon. Coating is effected by a vapour deposition technique. These particles may be, for example, of aluminium, silver, nickel or stainless steel. Typically the thickness of this coating is 10nm. This or the other side of the or each film is coated with a bonding layer, the softening or melting point of which is between 150° and 230°C and is below the softening or melting point of polyethylene terephthalate.

The films 9 are guided towards the heated strip by a laminator including a series of tensioning and spreading rolls 11 which ensure that the interfaces between the films 9 and the strip are free of creases, stress lines and defects.

Bonding of the film layers onto the strip is effected by the rolls 7.

The laminated strip 10 then passes via an accumulator 12 to a coiler 14. Some means of forced cooling, e.g. a quenching tank, may be provided within the coating chamber 5.

Examples of laminated strip in accordance with the invention are shown in Figures 2 and 3.

The laminated strip of Figure 2 comprises a steel substrate 15 of between 0.05 to 0.5mm thickness, a bonding layer 16 of approximately 2 µm thickness, a metallised aluminium layer 17 of approximately 10nm thickness and a polyethylene terephthalate layer 18 of between 10 and 100 µm thickness. A clear protective scratch-resistance layer may be applied to the polyethylene terephthalate layer.

As tinmill products have a relatively wide range of tensile strengths (from 335 to 660 N/mm²), hardnesses (52 to 77 HR30T) and elongations (up to 35%) the resulting laminates have unprecedented versatility. In addition, because of the intrinsic properties of the steel substrate the laminate is easier to slit and blank and tool tolerances do not need to be so demanding as with aluminium.

Because of the extremely good surface finish that is typical of tinmill products (surface roughnesses better than 0.07 to 0.15 µm centre line average are typical depending on the finish required) it has been found that laminated products of this invention exhibit particularly good surface finishes. This is surprising because it may be envisaged that the laminated film of polyethylene terephthalate would cover up imperfections in the substrate. However experience has shown that the fine surface finish enhances the specular image produced by the laminated products.

The polyethylene terephthalate film on chromium passivated strip has been found to be particularly advantageous because passivation provides enhanced adhesion and corrosion resistance.

The combination of thin gauge and high strength means that the application may be downgauged giving little disadvantage to steel with respect to weight of the finished component when compared with aluminium.

It is also possible to produce from laminated strip in accordance with this invention reflector components from pressings rather than by bending and folding flat sheets. This has two major advantages; firstly more complex and sophisticated designs can be realised and secondly the problem with the reflectors not holding the exact shape required by the designer, because of flexing of the relatively flimsy sheets presently used and the manual assembly and handling required, are overcome. Thus, significantly more efficient and effective lumineres can be produced.

Current aluminium products require the use of a strippable film to protect polished surfaces during forming and handling. Presently, finished aluminium lumineres are despatched with a pair of cotton gloves to aid handling without marking. Once touched, marks cannot be removed from the aluminium as the salts on the skin etch it. Polymers are inherently more resistant to marking. In addition, as mentioned previously, it is possible to coat the polyethylene terephthalate films with hard scratch resistant layers thereby obviating the necessity for protective films. This would reduce costs of the finished product by up to 20%. Antistatic coatings may also be used that will reduce the need for cleaning.

The laminated strip of Figure 3 has particular application where iridescence is potentially a problem.

Iridescence is the coloured effect exhibited by thin films or when there is diffraction. In reflective materials with thin coatings, iridescence is the effect of interference produced between light reflected from the top surface of a transparent coating, i.e. a lacquer coating or anodised layer, and the light reflected from the surface of a polished substrate.

There are particular problems in the lighting industry. Daylight consists of a continuous spectrum of colours that does not produce noticeable iridescence. However many light manufacturers use lamps that produce a limited number of colours to produce the effect of a white or aesthetically tinged white light. Tri-phosphor lamps, for example, are commonly used. These contain a mixture of rare earth phosphors with a light output in the red, green and blue wavelengths of the spectrum and when used with anodised aluminium unacceptable rainbow colours are produced. Two methods that have been used to minimise this effect are to use semi-specular or matt finished materials to scatter the light or to try to build up a thick anodised layer. Commonly the anodised layer is between two and four µm although in the highest quality materials thicknesses up to five µm may be used. The first method suffers from the disadvantage that the light designer is limited by the diffuse light produced and the second method has the disadvantages that the iridescence is not overcome but only reduced and the cost for the product is greatly increased.

It has been found that reflective laminated strip produced in accordance with the invention has similar reflectance and surface finishes to existing materials but with limited or no iridescence.

To achieve this effect, it is necessary to ensure that the transparent layer is several times thicker than the wavelength of visible light. The interference colours are not then visible. It has been found that with a transparent layer in excess of about 15 µm (about 25 times the wavelength of visible light) the level of iridescence is reduced to the point where it is barely visible even under the demanding conditions of tri-phosphor bulbs. At 25 µm the iridescent effect is absent.

The proposed laminate is shown in Figure 3. The transparent polyethylene terephthalate film 19 is of a thickness of approximately 15 µm in both crystalline and amorphous forms. The required reflective surface was produced by coating the underside of the film 19 with a metallic substance 21 by vapour deposition. The thickness of this layer is approximately 10nm. The composite is then bonded to the steel substrate 22 for rigidity using the apparatus described above or by a wet adhesive system. Further layers may be overlaid on the film to impart enhanced performance, for example scratch or ultra violet light resistance, but the refractive indices of these materials should be similar to the polyethylene terephthalate film to avoid problems with iridescence.

## Claims

1. A laminated corrosion resistant steel strip comprising a film of polyethylene terephthalate which includes on one of its surfaces a bonding layer and is bonded by heating and rolling to a strip of chromium passivated steel, the strip being **characterised in that** the surface of the polyethylene terephthalate film remote from the bonding layer has a reflective metallic coating, strip being **characterised in that** the thickness of the polyethylene terephthalate film is between 10 and 100 µm and that the thickness of the strip of chromium passivated steel is between 0.05 mm and 0.5 mm, and **in that** the melting point of the bonding layer is between 150°C and 230°C and is below the softening or melting point of the polyethylene terephthalate.

2. Laminated strip as claimed in Claim 1 wherein the thickness of the polyethylene terephthalate film is between 10 and 80 µm.

3. Laminated strip as claimed in Claim 2 wherein the thickness of the polyethylene terephthalate film is between 12 and 50 µm.

4. Laminated strip as claimed in Claim 3 wherein the thickness of the polyethylene terephthalate film is between 12 and 25 µm.

5. Laminated strip as claimed in Claim 4 wherein the thickness of the polyethylene terephthalate film is between 15 and 25 µm.

6. Laminated strip as claimed in any one of Claims 1 to 5 wherein the thickness of the metallic coating is between 5nm and 50nm.

7. Laminated strip as claimed in any one of the preceding Claims wherein the film of polyethylene terephthalate is coated with a scratch resistant layer.

8. A method of producing a corrosion resistant steel strip laminate from a chromium passivated steel strip having a thickness of between 0.05 and 0.5mm and a polyethylene terephthalate (PET) film having a thickness between 10 and 100 µm, the method comprising:
- applying a bonding layer having a melting point of between 150 and 230°C - which melting point is below the softening or melting point of the PET - to the surface of the PET film to be applied to the steel strip or to the steel strip surface to which the film is to be applied and
- applying to the other film surface, by a vapour deposition process, a coating of metallic particles to form a reflective surface on the film, and
- hot roll bonding the PET film to one or each surface of the steel strip by means of said bonding layer.

9. A method as claimed in Claim 8 wherein the steel strip is heated to a temperature of the order of 160°C before it enters the nip of a pair of contra-rotating rolls.

## Patentansprüche

1. Laminiertes korrosionsbeständiges Stahlband mit einem Film aus Polyethylenterephthalat, der auf einer seiner Oberflächen eine Verbindungsschicht aufweist und durch Erhitzung und Aufwalzen mit einem durch Chrom gegen Korrosion geschützten Stahlband verbunden ist, **dadurch gekennzeichnet, daß** der Polyethylenterephthalatfilm auf der der Verbindungsschicht gegenüberliegenden Oberfläche einen reflektierenden metallischen Überzug aufweist, und das Band **dadurch gekennzeichnet ist, daß** der Polyethylenterephthalatfilm zwischen 10 und 100 µm dick ist, und daß das Band aus durch Chrom gegen Korrosion geschützten Stahl zwischen 0,05 mm und 0,5 mm dick ist, und daß der Schmelzpunkt der Verbindungsschicht zwischen 150°C und 230°C und unter dem Erweichungspunkt oder dem Schmelzpunkt des Polyethylenterephthalats liegt.

2. Laminiertes Band nach Anspruch 1, bei welchem die Dicke des Polyethylenterephthalatfilms zwischen 10 und 80 µm beträgt.

3. Laminiertes Band nach Anspruch 2, bei welchem die Dicke des Polyethylenterephthalatfilms zwischen 2 und 50 µm beträgt.

4. Laminiertes Band nach Anspruch 3, bei welchem die Dicke des Polyethylenterephthalatfilms zwischen 12 und 25 µm beträgt.

5. Laminiertes Band nach Anspruch 4, bei welchem die Dicke des Polyethylenterephthalatfilms zwischen 15 und 25 µm beträgt.

6. Laminiertes Band nach einem der Ansprüche 1 bis 5, bei welchem die Dicke des metallischen Überzugs zwischen 5 nm und 50 nm beträgt.

7. Laminiertes Band nach einem der vorhergehenden Ansprüche, bei welchem der Film aus Polyethylenterephthalat mit einer kratzfesten Schicht überzogen ist.

8. Verfahren zur Erzeugung eines korrosionsfesten Stahlbandlaminats das ein durch Chrom gegen Korrosion geschütztes Stahlband mit einer Dicke zwischen 0,05 und 0,5 mm und einem Polyethylenterephthalat-(PET)-Film mit einer Dicke zwischen 10 und 100 µm aufweist, mit den folgenden Schritten:
- es wird eine Verbindungsschicht mit einem Schmelzpunkt zwischen 150 und 230°C (dieser Schmelzpunkt liegt unter dem Erweichungspunkt oder dem Schmelzpunkt des PETs) auf die Oberfläche des auf dem Stahlband aufzubringenden PET-Films oder der Stahlbandoberfläche aufgebracht, auf der der Film aufgetragen werden soll, und
- es wird auf die andere Filmoberfläche durch einen Dampfablagerungsprozess ein Überzug aus metallischen Partikeln aufgetragen, um auf den Film eine reflektierende Oberfläche zu erzeugen und
- es wird durch eine Heißwalzverbindung der PET-Film auf einer oder beiden Oberflächen des Stahlbands mittels der Verbindungsschicht festgelegt.

9. Verfahren nach Anspruch 8, bei welchem das Stahlband auf eine Temperatur in der Größenordnung von 160°C aufgeheizt wird, bevor es in den Einlauf eines Walzenpaars mit gegenläufigen Walzen eintritt.

## Revendications

1. Ruban d'acier laminé résistant à la corrosion comprenant un film de polyéthylène téréphtalate qui englobe, sur une de ses surfaces, une couche de soudage et qui est soudé par chauffage et par laminage à un ruban d'acier soumis à une passivation au chrome, le ruban étant **caractérisé en ce que** la surface du film de polyéthylène téréphtalate éloignée de la couche de soudage possède un revêtement métallique réfléchissant, le ruban étant **caractérisé en ce que** l'épaisseur du film de polyéthylène téréphtalate se situe entre 10 et 100 µm et **en ce que** l'épaisseur du ruban d'acier soumis à une passivation au chrome se situe entre 0,05 mm et 0,5 mm, et **en ce que** le point de fusion de la couche de soudage se situe entre 150 °C et 230 °C et est inférieur au point de ramollissement ou de fusion du polyéthylène téréphtalate.

2. Ruban laminé selon la revendication 1, dans lequel l'épaisseur du film de polyéthylène téréphtalate se situe entre 10 et 80 µm.

3. Ruban laminé selon la revendication 2, dans lequel l'épaisseur du film de polyéthylène téréphtalate se situe entre 12 et 50 µm.

4. Ruban laminé selon la revendication 3, dans lequel l'épaisseur du film de polyéthylène téréphtalate se situe entre 12 et 25 µm.

5. Ruban laminé selon la revendication 4, dans lequel l'épaisseur du film de polyéthylène téréphtalate se situe entre 15 et 25 µm.

6. Ruban laminé selon l'une quelconque des revendications 1 à 5, dans lequel l'épaisseur du revêtement métallique se situe entre 5 nm et 50 nm.

7. Ruban laminé selon l'une quelconque des revendications précédentes, dans lequel le film de polyéthylène téréphtalate est enduit d'une couche résistant aux rayures.

8. Procédé de fabrication d'un ruban en acier laminé résistant à la corrosion à partir d'un ruban en acier soumis à une passivation au chrome possédant une épaisseur entre 0,05 et 0,5 mm et d'un film de polyéthylène téréphtalate (PET) possédant une épaisseur entre 10 et 100 µm, le procédé comprenant le fait de :
- appliquer une couche de soudage dont le point de fusion se situe entre 150 et 230 °C - ledit point de fusion étant inférieur au point de ramollissement ou au point de fusion du PET - sur la surface du film en PET qui doit venir s'appliquer sur le ruban en acier ou sur la surface du ruban en acier sur laquelle doit être appliqué le film et
- appliquer sur l'autre surface du film, via un procédé de déposition en phase vapeur, un revêtement de particules métalliques pour former une surface réfléchissante sur le film, et
- souder par laminage à chaud le film en PET sur une surface ou sur chacune des surfaces du ruban en acier à l'aide de ladite couche de soudage.

9. Procédé selon la revendication 8, dans lequel on chauffe le ruban en acier à une température de l'ordre de 160 °C avant de le faire passer dans l'espace de pincement d'une paire de cylindres tournant dans des directions opposées.
